# EUROPEAN PATENT SPECIFICATION

(11) **EP 1 655 518 B1**
(45) Date of publication and mention of the grant of the patent: **17.12.2008**
(21) Application number: 04026399.8
(22) Date of filing: 06.11.2004
(51) Int. Cl.: F16H 63/18, F16H 63/32

(54) **Gear shift assembly for all-terrain vehicles**
Getriebeschaltanordnung für Geländefahrzeuge
Ensemble de changement de vitesse pour véhicules tout-terrain

(43) Date of publication of application: 10.05.2006
(73) Proprietor: Kwang Yang Motor Co., Ltd., Kaohsiung City (TW)
(72) Inventor: Ho, Chao-Chang, Fongshan City, Kaohsiung County (TW)
(74) Representative: Haft, von Puttkamer, Berngruber

(56) References cited:
- EP-A- 0 695 892
- GB-A- 2 153 024
- GB-A- 2 186 332
- US-A- 4 529 080
- PATENT ABSTRACTS OF JAPAN vol. 005, no. 037 (M-058), 10 March 1981 (1981-03-10) -& JP 55 163365 A (NISSAN MOTOR CO LTD), 19 December 1980 (1980-12-19)
- PATENT ABSTRACTS OF JAPAN vol. 010, no. 073 (M-463), 22 March 1986 (1986-03-22) -& JP 60 215426 A (FUJI TEKKOSHO:KK; others: 01), 28 October 1985 (1985-10-28)

## Description

### FIELD OF THE INVENTION

The present invention relates to a gear shift assembly, more particularly to a gear shift assembly for all-terrain vehicles without needing an additional manufacturing process for installing a first groove on a transmission wheel thereof and being affected by the resilience of a spring while being installed into a transmission gearbox.

### BACKGROUND OF THE INVENTION

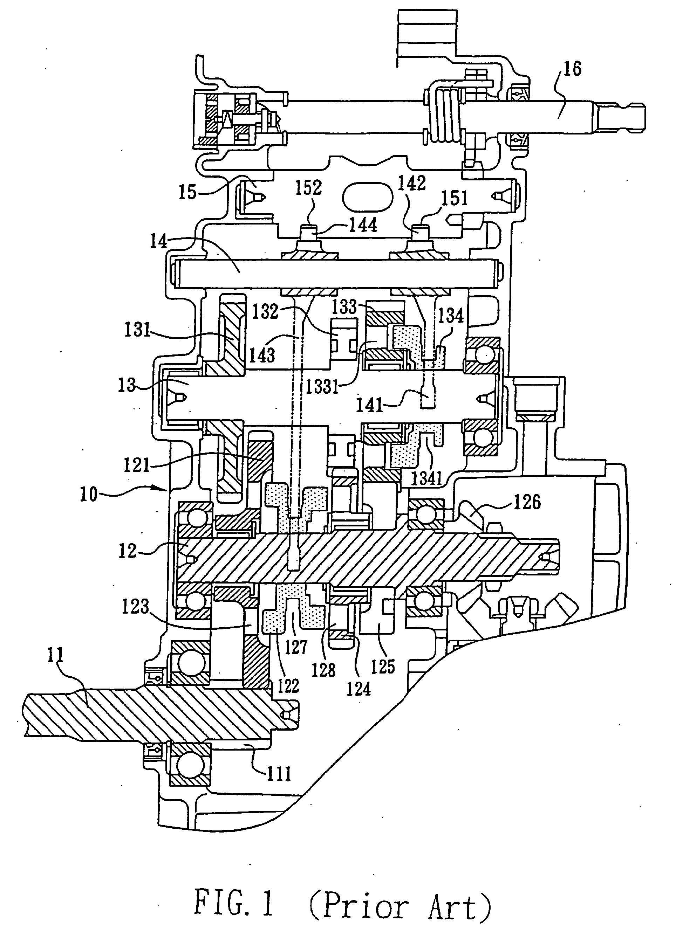

With reference to FIG. 1, a transmission 10 comprises a driven shaft 11 disposed therein, a transmission gear 111 integrally formed and disposed on the driven shaft 11 for engaging and driving a reverse gear 121 disposed on one side of a transmission shaft 12, and the reverse gear 121, a second sliding member 122, a force applying gear 124, a forward gear 125 and an active bevel gear 126 are disposed in sequence on the transmission shaft 12, wherein the reverse gear 121, second sliding member 122 and force applying gear 124 comprise an embedding groove 123, 127, 128 each, and the second sliding member 122 is engaged with a serrated section (not shown in the figure) of the transmission shaft 12 by a serrated section (not shown in the figure) of the second sliding member 122. When the transmission gear 12 is rotating, the reverse gear 121 and the force applying gear 124 are in an idle status.

Further, a main shaft 13 is disposed adjacent to the transmission shaft 12, and the main shaft 13 comprises a gear 131, a force applying gear 132, a forward gear 133 and a first sliding member 134 disposed in sequence on the main shaft 13, wherein the gear 132 is engaged with a transmission gear 111 on the passive shaft 11 (which is not shown in FIG. 1 due to the viewing angle). The forward gear 133 and the first sliding member 134 also have an embedded groove 1331, 1341, and the first sliding member 134 is engaged with a serrated section (not shown in the figure) of the main shaft 13 by a serrated section (not shown in the figure) of the first sliding member 134. The force applying gear 132 is engaged precisely with a force applying gear 134 of the transmission shaft 12, and the forward gear 133 is engaged precisely with a forward transmission gear 125 of the transmission shaft 12, and the gear 131 on the main shaft 13 is engaged and rotated with a transmission gear 111 on the passive shift 11. When the main shaft 13 is rotating, the forward gear 133 at the main shaft 13 is in an idle status.

Further, the embedded grooves 1341, 127 of the first sliding member 134 and the second sliding member 122 are provided for the insertion of a first gear shift fork 141 and a second gear shift fork 143 on the gear shift assembly respectively, and the first gear shift fork 141 and the second gear shift fork 143 are coupled respectively to a gear shift fork shaft 14, and one end of the first gear shift fork 141 and the second gear shift fork 143 is coupled to a sliding position pillar 142, 144 of a first groove 151 and a second groove 152 disposed on the circumference of a transmission wheel to facilitate shifting the gear of the adjacent gear shift rod 16.

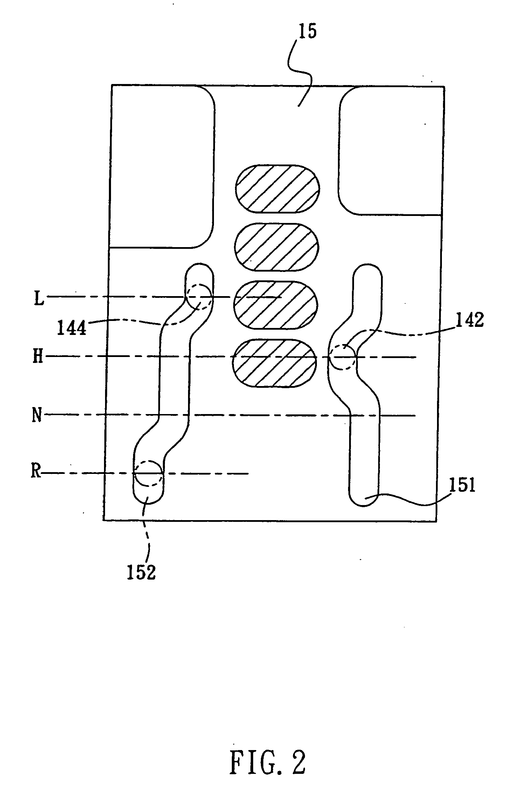

Please refer to FIG. 2 for the foregoing gear shift assembly. If it is necessary to shift from a reverse gear (R) to a low gear (L) or from a low gear (L) to a reverse gear (R), the first gear shift fork 141 will produce a rough operation when passing through the high gear (H), so that when a driver shifts the gear directly from the reverse gear (R) to the low gear (L) or directly from a low gear (L) to a reverse gear (R), since it is unable to pass the high gear (H) smoothly that makes the whole gear change process unsmooth.

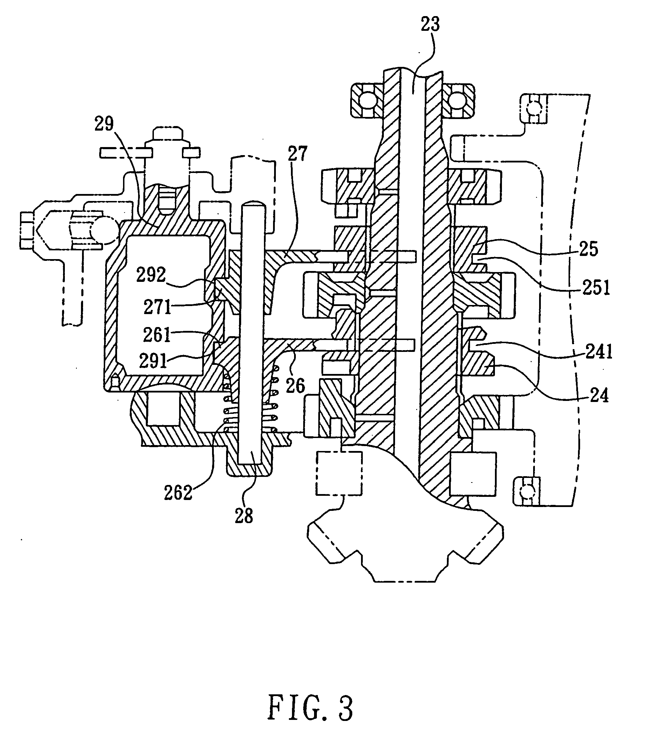

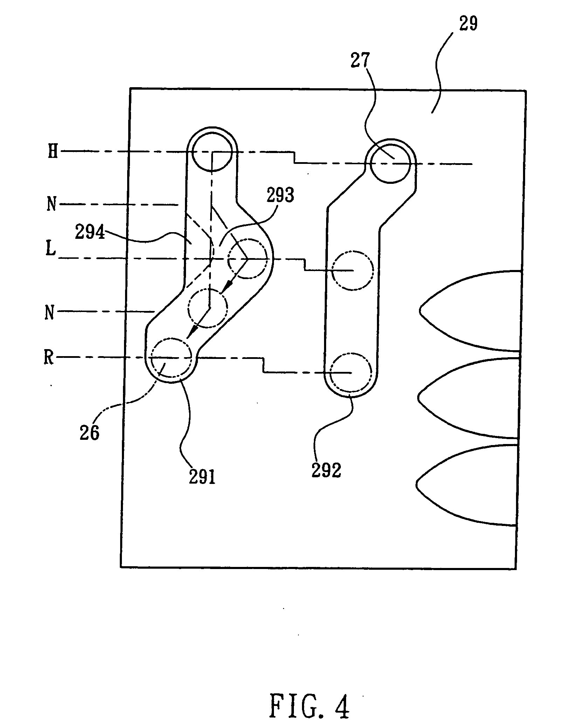

Please refer to FIG. 3 for a solution to overcome the shortcoming of the foregoing gear shift assembly that cannot be shifted smoothly. In FIG. 3, the present invention comprises an output shaft 23 having a first sliding member 24 and a second sliding member 25 disposed thereon, and the first sliding member 24 and the second sliding member 25 individually have an embedded groove 241, 251. These embedded grooves 241, 251 are provided for the insertion of a first gear shift fork 26 and a second gear shift fork 27 on the gear shift assembly. The first gear shift fork 26 and the second gear shift fork 27 are coupled to a gear shift fork rod 28, and one end of the first gear shift fork 26 and the second gear shift fork 27 comprises a positioning pillar 261, 271 sliding in a first groove 291 and a second groove 292 on the circumference of a transmission wheel 29. To smoothly shift a gear from a reverse gear (R) to a high gear (H) or from a high gear (H) to a reverse gear (R), a spring 262 is installed on the first gear shift fork 26. A groove is added to the first groove 291 of the transmission wheel 29 in the manufacturing procedure. Please refer to FIG. 4. The dotted line in FIG. 4 indicates a first groove 291 before the groove is added to the manufacturing procedure, and the solid line as shown in FIG. 4 indicates a groove 294 after the groove is added to the manufacturing procedure. Therefore, when the driver shifts the gear from a reverse gear (R) to a high gear (H) or from a high gear (H) to a reverse gear (R), the first gear shift rod 26 can smoothly pass through the low gear (L) and makes the gear shift smoother, since the added groove 294 as indicated by the solid line is manufactured in a straight line.

However, the method as describe above and depicted in FIGS. 3 and 4 has the following drawbacks:
1. Since the first groove 291 needs an additional manufacturing process, therefore the manufacture becomes more complicated and incurs a higher cost.
2. Since the spring 262 and the first gear shift fork 26 are separated, therefore it is not easy to install the spring 262 and the first gear shift fork 26 to the gear shift fork rod 28 due to the resilience and tension of the spring 262. It is not easy to make the installation when the spring 262 and the first gear shift fork 26 are installed in the transmission gearbox.

US4529080 discloses a gear shift assembly for all-terrain vehicles, comprising a gearshift rod, a shift fork rod, a sleeve of which the internal periphery is sheathed onto the shift fork rod, a first gear shift fork disposed on the external periphery of the sleeve for driving a first sliding member movably disposed on a gear shaft, a second gear shift fork for driving a second sliding member, said first and second gear shift forks being driven by the gearshift rod, wherein a guiding member is moveably disposed on the external periphery of the sleeve, and a spring is disposed on the external periphery of the sleeve against the guiding member, such that the spring, the guiding member and the first gear shift fork on the sleeve define a whole gear shift fork module.

### SUMMARY OF THE INVENTION

In view of the aforementioned shortcomings of the prior-art having an unsmooth gear shift and the intention of improving such gear shift by adding a manufacturing process of installing an additional groove and a spring which causes a more complicated manufacturing process, a higher cost and a more difficult assembly, the inventor of the present invention based on years of experience in related field to conduct researches and experiments and finally invented the "gear shift assembly of all-terrain vehicles" in accordance with the present invention to overcome the foregoing shortcomings. The ingenious idea of the invention definitely gives a contribution to the society.

Therefore, it is the primary objective of the present invention to provide a gear shift assembly of all-terrain vehicles, according to claim 1. It comprises a gear shift rod, for driving a transmission wheel disposed adjacent to the gear shift rod to drive a first gear shift fork and a second gear shift fork disposed on the gear shift fork rod to move, and the first gear shift fork and the second gear shift fork driving a first sliding member and a second sliding member of a gear shift to shift gears, wherein the first gear shift fork is disposed on the external periphery of a sleeve, and a guiding member and a spring are disposed in sequence on the gear shift fork to define a whole gear shift fork module on the sleeve, and the sleeve comprises a guiding member, a spring, a spacer and a fixture disposed in sequence onto the first gear shift rod, and couple the components of the sleeve on the sleeve. In the meantime, the first gear shift fork has a pin passing through the guiding member to define a whole gear shift module, such that the internal periphery of the gear shift fork module is coupled onto the gear shift fork rod. Thus, the present invention has the advantages as listed below:
1. It no longer needs an additional manufacturing process for installing a first groove on the transmission wheel, and thus simplifying the manufacture and effectively overcoming the shortcomings of the complicated manufacture and high cost of the prior art.
2. The sleeve of the gear shift fork module is set on the gear shift fork rod and then installed into a transmission gearbox without being affected by the resilience of the spring. Thus, the present invention can achieve the purpose of installing the gear shift fork module to the transmission gearbox easily.

The above and other objects, features and advantages of the present invention will become apparent from the following detailed description taken with the accompanying drawings.

### BRIEF DESCRIPTION OF THE DRAWINGS

FIG. 1 is an illustrative view of a prior-art gear shift assembly for transmission gearboxes.
FIG. 2 is a planar view of the transmission wheel as depicted in FIG. 1.
FIG. 3 is an illustrative view of another prior-art gear shift assembly for transmission gearboxes.
FIG. 4 is a planar view of the transmission wheel as depicted in FIG. 3.
FIG. 5 is an illustrative view of the gear shift assembly and the transmission gear in the transmission of the present invention.
FIG. 6 is an illustrative view of the gear shift fork module of the present invention.
FIG. 7 is a top view of the gear shift fork module of the present invention.
FIG. 8 is a planar view of the transmission wheel of the present invention.
FIG. 9 is an illustrative view of the gear shift assembly in a transmission gear box being shifted into a drive gear according to the present invention.
FIG. 10 is an illustrative view of the gear shift assembly in a transmission gear box being shifted into a reverse gear according to the present invention.

### DETAILED DESCRIPTION OF THE PREFERRED EMBODIMENTS

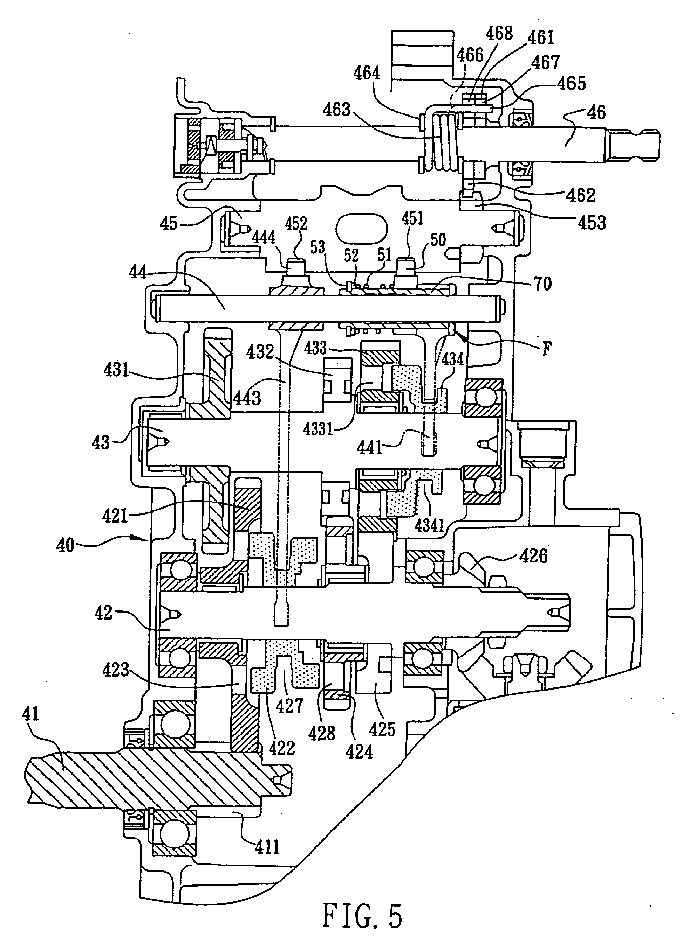

Please refer to FIGS. 3 and 4 for the gear shift assembly for all-terrain vehicles of the present invention. Please refer to FIG. 5 for a transmission gearbox 40, and the transmission gearbox 40 comprises a passive shaft 41 with a transmission gear 411 integrally formed thereon and a reverse gear 421 disposed adjacent to a transmission shaft 42 being engaged with each other. The transmission shaft 42 comprises the reverse gear 421, a second sliding member 422, a force applying gear 424, a forward gear 425 and an active bevel gear 426 are installed in sequence onto the transmission shaft 42, wherein the reverse gear 421, the second sliding member 422 and the force applying gear 424 individually have an embedded groove 423, 427, 428, and the second sliding member 422 is engaged to a serrated section (not shown in the figure) of the transmission shaft 42 by a serrated section (not shown in the figure) of the second sliding member 422. When the transmission shaft 42 is rotating, the reverse gear 421 and the force applying gear 424 thereon are in an idle status.

Further, a main shaft 43 is disposed adjacent to another side of the transmission shaft 42, and the main shaft 43 comprises a gear 431, a force applying gear 432, a forward gear 433 and a first sliding member 434 installed in sequence onto the main shaft 43, wherein the gear 431 is engaged with a transmission gear 411 of the passive shaft 41 (which is not shown in the figure due to the viewing angle). The forward gear 433 and the first sliding member 434 also individually comprise an embedded groove 4331, 4341, and the first sliding member 434 is engaged to a serrated section (not shown in the figure) of the main shaft 43 by a serrated section (not shown in the figure) of the first sliding member 434. The force applying gear 432 is engaged precisely with the force applying gear 424 of the transmission shaft 42 and the forward gear 433 is engaged with the forward gear 425 of the transmission shaft 42. The gear 431 of the main shaft 43 is engaged and rotated with the transmission gear 411 of the passive shaft 41. When the main shaft 43 is rotating, the forward gear 433 at the main shaft 43 is in an idle status.

Further, the embedded groove 4341, 427 of the foregoing first sliding member 434 and the second sliding member 422 are provided for the insertion of a first gear shift fork 441 and a second gear shift fork 443.

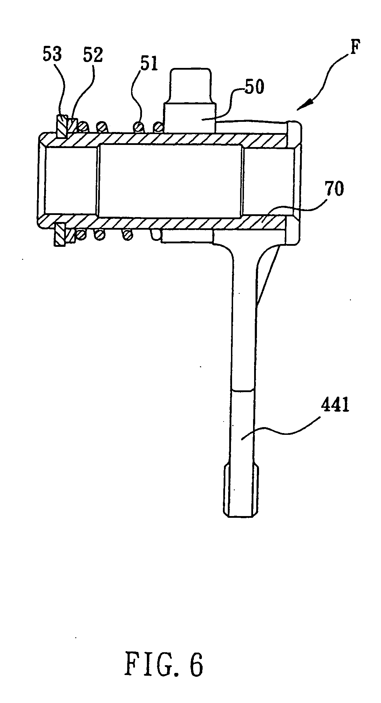

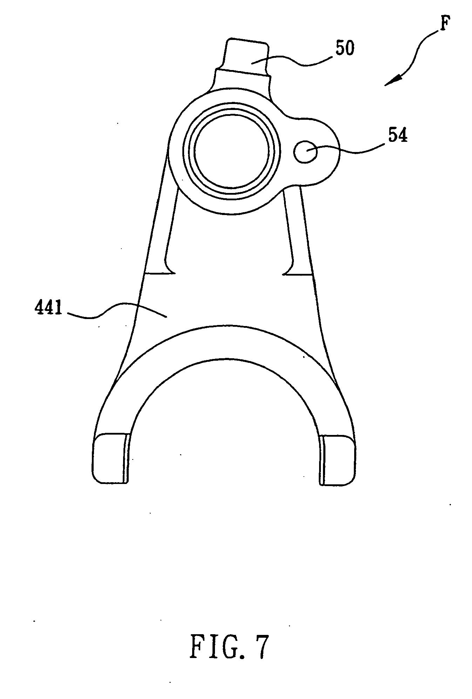

With the foregoing basic structure, the technology of the invention is implemented as described below. Please refer to FIGS. 5 to 7. The gear shift assembly comprises a gear shift rod 46 driving a transmission wheel 45 disposed adjacent to the gear shift rod 44 to drive a first gear shift fork 441 and the second gear shift fork 443 to move. The first gear shift fork 441 and the second gear shift fork 443 drive a first sliding member 434 and a second sliding member 422 to move and shift gears respectively, wherein the first gear shift fork 441, a guiding member 50, a spring 51 and a spacer 52 are installed in sequence on the external periphery of a sleeve 70, and these components are fixed onto the sleeve 70 by a fixture 53 (such as an E-shape clamp) and fixed on a pin 54 on the first gear shift fork 441 and passing through the guiding member 50 to define a whole gear shift fork module F. The internal periphery of the sleeve 70 is sheathed onto the gear shift fork rod 44, and the guiding member 50 on the first gear shift fork 441 and a positioning pillar 444 disposed at one end of the second gear shift fork 443 slide according to the first groove 451 and the second groove 452 on the circumference of the transmission wheel 45, while shifting the gear shift rod 46 adjacent to the transmission wheel 45 into a gear. The gear shift rod 46 comprises a fixed plate 461 rotating together with the gear shift rod 46, an active gear 462 disposed on one side of the fixed plate 461, and a buffer spring 463 disposed on another side of the fixed plate 461. The buffer spring 463 is fixed between a fixing clamp 464 and the fixed plate 461 by the fixing clamp 464 disposed on one side of the buffer spring 463, and both end sections 465, 466 of the buffer spring 463 are inserted into through holes 467, 468 disposed on the fixed plate 461 and the active gear 462 respectively, such that the fixed plate 461 drives the main gear 462 to move through the buffer spring 463 and further drive a passive gear 453 on the transmission wheel 45 to rotate the transmission wheel 45 and drive the first gear shift fork 441 and the second gear shift fork 443 for bringing the first sliding member 434 and the second sliding member 422 into a gear shift.

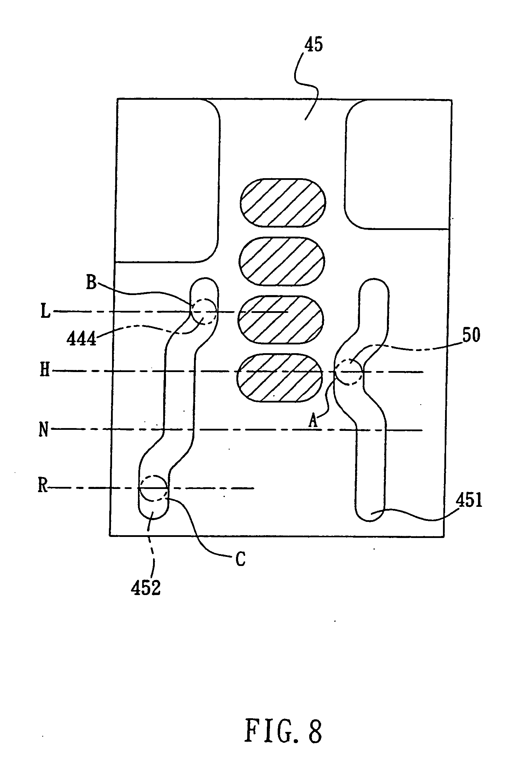

Please refer to FIGS. 5 and 8. The gear positions for the first groove 451 and the second groove 452 on the transmission wheel 45 are low gear (L), a high gear (H), a neutral gear (N), and a reverse gear (R). Further, if the active gear 462 of the gear shift rod 46 drives the passive gear 453 to shift the transmission wheel 45 into the high gear (H), the guiding member 50 of the gear shift fork module F (as shown in FIGS. 5 and 8) is affected by the curved groove A of the first groove 451 as shown in FIG. 8, the first gear shift fork 441 will push the first sliding member 434 into embedded groove 4331 of the forward gear 433 and drive it to move. Then, the second gear shift fork 443 will not push the second sliding member 422. If the first sliding member 434 is not embedded into the embedded groove 4331 successfully, then the guiding member 50 will compress the spring 51 to slide the guiding member 50 on the pin 54 until the first sliding member 434 is embedded into the embedded groove 4331 of the forward gear 433. If the first sliding member 434 is embedded into the embedded groove 4331 of the forward gear 433 successfully at the beginning, then the guiding member 50 will not compress the spring 51.

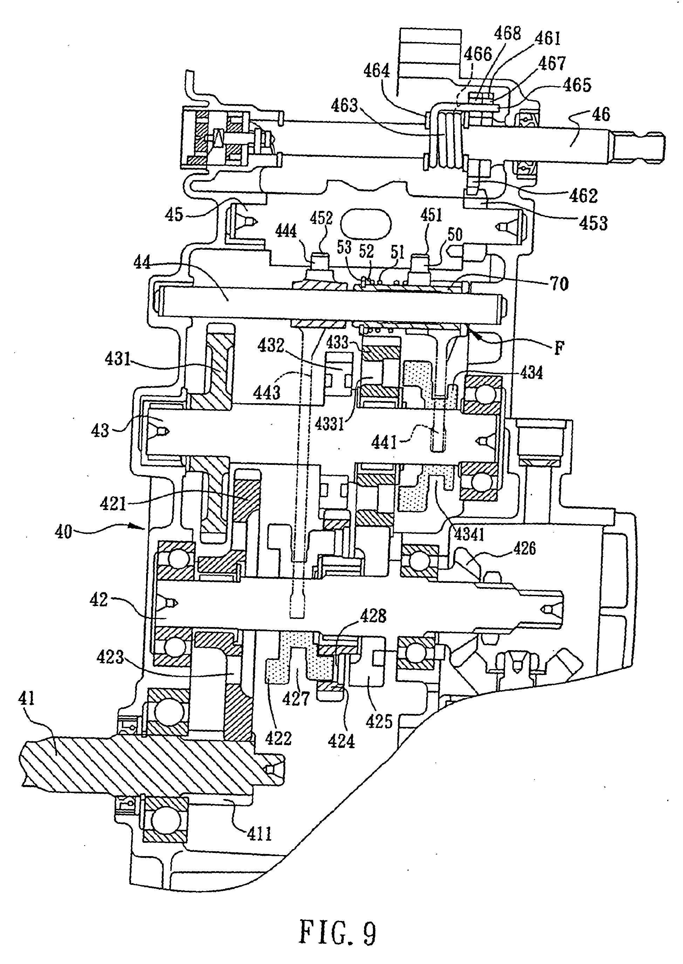

Further, when the gear shift rod 46 shifts the transmission wheel 45 into the low gear (L), then the transmission wheel 45 drives the positioning pillar 444 of the second gear shift fork 443 into the position B of the second groove 452. Please refer to FIGS. 8 and 9. The second gear shift fork 443 will push the second sliding member 422 to be embedded into the embedded groove 428 of the force applying gear 424 and drive it to move. Then, the first gear shift fork 441 will not push the first sliding member 434.

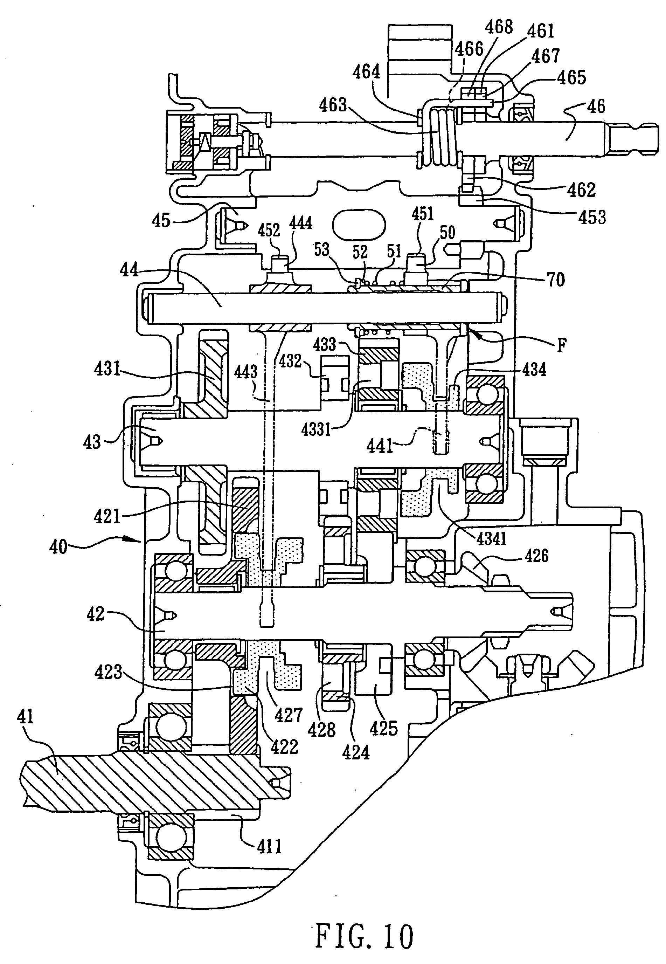

Further, when the gear shift rod 46 shifts the transmission wheel 45 into the reverse gear (R), the transmission wheel 45 pushes the positioning pillar 444 of the second gear shift fork 443 into the position C of the second groove 452 as shown in FIGS. 8 and 10, the second gear shift fork 443 will push the second sliding member 422 to be embedded into the embedded groove 423 of the reverse gear 421 and drive it to move. Then, the first gear shift fork 441 will not push the first sliding member 434.

Further, when the gear shift rod 46 shifts the transmission wheel 45 from a low gear (L) directly to a reverse gear (R) as shown in FIG. 8 and passes through to the high gear (H) and the guiding member 50 of the gear shift fork module F moves from the curved groove A of the first groove 451, it can pass smoothly through the curved groove A of the high gear (H) by means of the spring 51 of the gear shift fork module F, such that the second gear shift fork 443 can smoothly reach the reverse gear (R) to give a smooth operation of shifting the high gear (H) to the reverse gear (R). On the other hand, when it is necessary to shift the reverse gear (R) to the low gear (L), the transmission the gear rod 46 passes smoothly through the curved groove A of the high gear (H) by the spring 51 of the gear shift fork module F. The second gear shift fork 443 successfully reaches the low gear (L) as to provide a smooth gear shift operation for shifting a gear from the high gear (H) to the low gear (L).

Therefore, the gear shift fork module F of the invention allows drivers to shift a gear directly from the reverse gear (R) to the low gear (L) or directly from the low gear (L) to the reverse gear (R) and makes the gear shifting smoother.

The present invention does not require additional manufacturing process for the first groove 451 on the transmission wheel 45, and simplifies the manufacturing to effectively improve the complicated manufacturing process and lower the cost. Further, the sleeve 70 of the gear shift fork module F sheathes onto the gear shift fork rod 44 and is installed to a transmission gearbox without being affected by the resilience of the spring 51 as to provide an easy installation of the gear shift fork module F to the transmission gearbox.

While the invention has been described by means of specific embodiments, numerous modifications and variations could be made thereto by those skilled in the art without departing from the scope of the invention set forth in the claims.

## Claims

1. A gear shift assembly all-terrain vehicles, comprising:
a gearshift rod (46);
a transmission wheel (45), disposed adjacent to said gear shift rod (46) and driven by said gear shift rod (46) ;
a shift fork rod (44);
a sleeve (70), of which the internal periphery is sheathed onto said shift fork rod (44);
a first gear shift fork (441), disposed on the external periphery of said sleeve (70) for driving a first sliding member (434) moveably disposed on a gear shaft (43);
a second gear shift fork (443), moveably disposed on said shift fork rod (44) for driving a second sliding member (422) movably disposed on another gear shaft (42);
said first (441) an second (443) gear shift forks being driven by said transmission wheel (45);
a guiding member (50), moveably disposed on the external periphery of said sleeve (70) at one end of said first gear shift fork (441) facing said second gear shift fork (443) ; and
a spring (51),disposed on the external periphery of said sleeve (70) in sequence to and against the guiding member (50), such that said spring (51), said guiding member (50), and said first gear shift fork (441) on said sleeve (70) define a whole gear shift fork module (F).

2. The gear shift assembly for all-terrain vehicles of claim 1, wherein said sleeve (70) disposed on the external periphery of said shift fork rod (44) comprises:
a spacer (52), disposed on the external periphery of said sleeve (70) with one end against said spring (51); and
a fixture (53), disposed on and fixed onto the external periphery of said sleeve (70) in sequence to and against said spacer (52) for fixing said spring (51) and said guiding member (50) on said sleeve (70) between said spacer (52) and said first gear shift fork (441).

3. The gear shift assembly for all-terrain vehicles of claim 1, wherein said first gear shift fork (441) comprises:
a pin (54), passing through said guiding member (50), enabling said guiding member (50) to slide on said pin (54).

## Patentansprüche

1. Getriebe-Gangschaltanordnung für Geländefahrzeuge, die aufweist:
einen Schalthebel (46);
ein Übertragungsrad (45), das am Schalthebel (46) angeordnet ist und von diesem bewegbar ist;
eine Schaltgabelstange (44);
eine Hülse (70), die mit der Innenfläche auf die Schaltgabelstange (44) aufgesetzt ist;
eine ersten Schaltgabel (441), die auf die Hülse (70) außen aufgesetzt ist, um ein erstes Gleitelement (434) zu bewegen, das bewegbar auf einer Zahnradwelle (43) sitzt;
eine zweiten Schaltgabel (443), die bewegbar auf der Schaltstange (44) sitzt, um ein zweites Gleitstück (422) zu bewegen, das bewegbar auf einer anderen Zahnradwelle (42) sitzt;
wobei die erste und die zweite Schaltgabel (441 bzw. 443) vom Übertragungsrad (45) bewegbar sind;
und weiterhin ein Führungsglied (50), das an einem der zweiten Schaltgabel (443) zugewandten Ende der ersten Schaltgabel (441) bewegbar außen auf der Hülse (70) sitzt; sowie
eine Feder (51), die auf der Hülse (70) in Reihe mit dem Führungsglied (50) und an diesem anliegend angeordnet ist derart, dass die Feder (51), das Führungsglied (50) und die erste Schaltgabel (441) auf der Hülse (70) gemeinsam eine Schaltgabelgruppe (F) bilden.

2. Getriebe-Gangschaltanordnung für Geländefahrzeuge nach Anspruch 1, bei der die auf die Schaltgabelstange (44) aufgesetzte Hülse (70) aufweist:
einen Abstandhalter (52) auf dem Außenumfang der Hülse (70), an dessen einem Ende die Feder (51) anliegt; und
einen Festhalter (53), der auf den Außenumfang der Hülse (70) aufgesetzt und auf ihr befestigt ist, um die Feder (51) und das Führungsglied (50) auf der Hülse (70) zwischen dem Abstandhalter (52) und der ersten Schaltgabel (441) festzulegen.

3. Getriebe-Gangschaltanordnung für Geländefahrzeuge nach Anspruch 1, deren erste Schaltgabel (441) aufweist:
einen Stift (54), der durch das Führungsglied (50) verläuft und letzterem ermöglicht, entlang des Stifts (54) zu gleiten.

## Revendications

1. Ensemble de changement de vitesses pour véhicules tout-terrain, du type comportant :
une tige de changement de vitesses (46) ;
une roue de transmission (45), disposée de manière à être adjacente à la tige de changement de vitesses (46) et entraînée par cette tige de changement de vitesses (46) ;
une tige de fourchette de boîte (44) ;
un manchon (70) dont la périphérie interne est engagée sur la tige de fourchette de boite (44) ;
une première fourchette de boîte de changement de vitesses (441) disposée sur la périphérie externe du manchon (70) pour entraîner un premier membre coulissant (434) disposé mobile sur un arbre de transmission (43) ;
une deuxième fourchette de boîte de changement de vitesses (443) disposée mobile sur la tige de la fourchette de boite (44) pour entraîner un deuxième membre coulissant (422) disposé mobile sur un autre arbre de transmission (42) ;
la première (441) et la deuxième (443) fourchette de boîte de changement de vitesses étant entraînées par la roue de transmission (45) ;
un membre de guidage (50) disposé mobile sur la périphérie externe du manchon (70) à une extrémité de la première fourchette de boîte de changement de vitesses (441) située en regard de la deuxième fourchette de boîte de changement de vitesses (443) ; et
un ressort (51), disposé sur la périphérie externe du manchon (70) dans l'alignement et en appui contre le membre de guidage (50) de telle sorte que le ressort (51), le membre de guidage (50) et la première fourchette de boîte de changement de vitesses (441) sur ce manchon (70) définissent un module complet de fourchette de boîte de changement de vitesses (F).

2. Ensemble de changement de vitesses pour véhicules tout-terrain selon la revendication 1, où le manchon (70) disposé sur la périphérie externe de la tige de fourchette de boite (44) comprend :
une pièce d'écartement (52) disposée sur la périphérie externe du manchon (70), une de ses extrémités étant en appui contre le ressort (51) ; et
une fixation (53) disposée et fixée sur la périphérie externe du manchon (70) dans l'alignement et en appui contre la pièce d'écartement (52) pour fixer le ressort (51) et le membre de guidage (50) sur le manchon (70) entre la pièce d'écartement (52) et la première fourchette de boite de changement de vitesses (441).

3. Ensemble de changement de vitesses pour véhicules tout-terrain selon la revendication 1, où la première fourchette de boîte de changement de vitesses (441) comprend :
un ergot (54) passant au travers du membre de guidage (50) permettant au membre de guidage (50) de coulisser sur l'ergot (54).
